# EUROPÄISCHE PATENTANMELDUNG

(11) **EP 1 150 412 A1**
(43) Veröffentlichungstag der Anmeldung: **31.10.2001**
(21) Anmeldenummer: 00108783.2
(22) Anmeldetag: 25.04.2000
(51) Int. Cl.: H02H 3/33

(54) **Fehlerstrom-Schutzschalter und Verfahren zum Überprüfen der Funktionsfähigkeit eines Fehlerstrom-Schutzschalters**

(71) Anmelder: SIEMENS AKTIENGESELLSCHAFT, 80333 München (DE)
(72) Erfinder: Bauer, Bernhard,Dipl.-Ing. (FH), 93053 Regensburg (DE)

(57) **Zusammenfassung**

Um eine einfache versorgungsspannungsunabhängige Prüfschaltung (16) zu ermöglichen, die ein sicheres Überprüfen der Funktionsfähigkeit eines Schutzschalters (2) gewährleistet, umfasst die Prüfschaltung (16) eine um einen Summenstromwandler (4) gewickelte potentialfreie Prüfwicklung (18). Diese wird vorzugsweise über einen Prüfschalter (20) und über eine zuschaltbare Bürde (R2) kurzgeschlossen. Dadurch wird das Auftreten eines Fehlerstroms simuliert. Durch geeignete Auswahl der zuschaltbaren Bürde (R2) besteht dabei in vorteilhafter Weise die Möglichkeit, die Empfindlichkeit des Schutzschalters (2) zu überprüfen.

## Beschreibung

Die Erfindung bezieht sich auf einen Fehlerstrom-Schutzschalter, insbesondere auf einen Differenzstromschutzschalter, mit einem Summenstromwandler und einer um diesen gewickelten Steuerwicklung. Die Erfindung bezieht sich weiterhin auf ein Verfahren zum Überprüfen der Funktionsfähigkeit eines solchen Fehlerstrom-Schutzschalters.

Ein solcher Fehlerstrom-Schutzschalter wird in elektrischen Anlagen zum Schutz des Menschen vor gefährlichen Körperströmen eingesetzt. Bei Auftreten eines Fehlerstroms trennt der Schutzschalter die Leiter eines Leiternetzes. Der Schutzschalter wird als eigenständige Baueinheit oder auch als ein Zusatzbaustein für ein Schaltgerät verwendet. Ein solcher Zusatzbaustein wird als Schutzschalterzusatz bezeichnet.

Bei den Schutzschaltern wird der netzspannungsunabhängige, sogenannte FI-Schalter (Fehlerstrom-Schutzschalter), von dem netzspannungsabhängigen DI-Schutzschalter (Differenzstrom-Schutzschalter) unterschieden. Beide Schaltertypen weisen einen Summenstromwandler auf, durch den die Leiter eines Leiternetzes geführt sind. Um den Summenstromwandler ist eine Steuerwicklung gewickelt, die mit einer Auswerteeinheit verbunden ist, über die ein Auslöser angesteuert wird. Bei Auftreten eines unzulässigen Fehlerstroms im Leiternetz wird dieser vom Summenstromwandler mit der dazugehörigen Auswerteeinheit erfasst, und der Auslöser trennt über eine Schaltmechanik die Leiter des Leiternetzes. Der Fehlerstrom, bei dem der Schutzschalter anspricht, wird als Auslösefehlerstrom bezeichnet. Der Auslösefehlerstrom steht in einem festen und durch Normen für die unterschiedlichen Fehlerstromarten festgelegten Verhältnis zu dem sogenannten Nennfehlerstrom. Der Nennfehlerstrom ist ein Maß für die Schutzklasse, für die der jeweilige Schutzschalter ausgelegt ist.

Der FI-/DI-Schutzschalter weist in der Regel eine Prüfeinrichtung auf, mit der die Funktionsfähigkeit des Schutzschalters überprüft werden kann. Bei einer solchen Prüfeinrichtung werden gewöhnlich zwei Primärleiter über eine Reihenschaltung aus Prüfwiderstand und Prüfwicklung und über einen betätigbaren Prüfkontakt (Taster) einen Prüfstromkreis bildend miteinander verbunden. Beim Schließen des Prüfkontakts wird somit ein Fehlerstrom erzeugt, welcher von dem Summenstromwandler mit der zugehörigen Auswerteeinheit erfasst wird. Eine derartige Prüfeinrichtung ist beispielsweise zu entnehmen aus dem Artikel "Fehlerstrom-Schutzschalter zum Schutz gegen gefährliche Körperströme", etz, Band 110 (1989), Heft 12, S. 580-584).

Beim Kurzschließen zweier Leiter zu Prüfzwecken besteht das Problem, dass unter Umständen ein Prüfstrom über den Prüfstromkreis permanent fließt, solange der Prüfkontakt betätigt wird. Dieses Problem tritt dann auf, wenn die Verbindung des Prüfstromkreises mit den Leitern des Leiternetzes auf der Einspeiseseite der Netzspannung, also vor der Schaltmechanik des Schutzschalters erfolgt, so dass selbst bei einem Trennen der Leiter durch den Schutzschalter bei der Prüfung weiterhin Strom im Prüfstromkreis fließt. Bei herkömmlichen Prüfeinrichtungen ist daher oftmals ein mit der Schaltmechanik des Schutzschalters gekoppelter Hilfsschalter in den Prüfstromkreis geschaltet, der bei der Abschaltung des Schutzschalters den Prüfstromkreis unterbricht, um die Unterbrechung des Stromflusses sicher zu gewährleisten. Die Anordnung eines Hilfsschalters erfordert jedoch zum einen zusätzliche Maßnahmen und ist zum anderen beispielsweise bei FI-/DI-Zusätzen aufgrund der nicht vorhandenen Schaltmechanik aus Platzgründen nicht immer möglich. Falls kein Hilfsschalter angeordnet werden kann, muss daher beispielsweise der Prüfstromkreis für einen permanent fließenden Prüfstrom ausgebildet sein. Die Auslegung für permanente Erregung ist insbesondere dann äußerst aufwendig, wenn der Schutzschalter für hohe Nennfehlerströme ausgelegt ist.

Der Erfindung liegt die Aufgabe zugrunde, einen Fehlerstrom-Schutzschalter sowie ein Verfahren zum Überprüfen seiner Funktionsfähigkeit anzugeben, wobei eine einfache und funktionssichere Ausgestaltung des Schutzschalters ermöglicht ist.

Die auf den Schutzschalter bezogene Aufgabe wird erfindungsgemäß gelöst mit einem Fehlerstrom-Schutzschalter, insbesondere ein Differenzstrom-Schutzschalter, mit einem Summenstromwandler und einer um diesen gewickelten Steuerwicklung, wobei eine netzspannungsunabhängige Prüfschaltung mit einer um den Summenstromwandler gewickelten potentialfreien Prüfwicklung vorgesehen ist.

Im Unterschied zu der bekannten Prüfeinrichtung, bei der durch Kurzschluss zweier Leiter des Leiternetzes ein tatsächlicher Fehlerstrom erzeugt wird, liegt der Erfindung die Idee zugrunde, einen Fehlerstrom lediglich zu simulieren. Dadurch entfallen die mit einem auf unbestimmte Zeit fließenden Prüfstrom verbundenen Verlustleistungsprobleme. Das entscheidende Element zur Simulation eines Fehlerstroms ist die potentialfreie Prüfwicklung, also eine um den Summenstromwandler gewickelte Spule, welche keine Verbindung zu den Leitern des Leiternetzes aufweist.

Der Simulation liegt das Prinzip zugrunde, dass in Abhängigkeit des Kurzschlusswiderstandes der Prüfwicklung durch das Induktionsprinzip die Magnetisierung des Summenstromwandlers variiert wird. Dieser Effekt tritt auch bei einem Fehlerstrom auf, da sich in diesem Fall die Magnetfelder der durch den Summenstromwandler geführten Leiter nicht mehr gegenseitig aufheben. Die Veränderung der Magnetisierung des Summenstromwandlers wird - wie bei einem allstromsensitiven DI-Schutzschalter üblich - von der mittels einer Wechselspannung angeregten Steuerwicklung und der dazugehörigen Auswerteeinheit erfasst. Ausgewertet wird dabei im Wesentlichen die über die Steuerwicklung messbare oder bestimmbare Permeabilität des Summenstromwandlers, welche abhängig ist von der Änderung der Magnetisierung des Summenstromwandlers.

In einer bevorzugten Ausführung weist die Prüfschaltung einen Prüfschalter auf, über den die Prüfwicklung kurzschließbar ist. Dies ermöglicht eine schaltungstechnisch besonders einfache Ausführung der Prüfschaltung. Unter Prüfschalter ist insbesondere auch ein Prüftaster zu verstehen.

Vorteilhafterweise ist die Prüfschaltung dabei ohne separate Spannungsversorgung ausgebildet. Die Prüfung erfolgt daher potentialfrei in dem Sinne, dass keine eigene Spannungsquelle vorhanden ist. Es ist vielmehr ausreichend, die aufgrund der wechselweisen Magnetisierung des Summenstromwandlers durch die Steuerwicklung in der Prüfwicklung induzierte Spannung zur Prüfung heranzuziehen.

In einer besonders zweckdienlichen Ausgestaltung weist die Prüfschaltung eine zuschaltbare Bürde auf, mittels der die über die Steuerwicklung messbare Permeabilität beeinflusst wird. Durch die Wahl der Bürde kann dabei in vorteilhafter Weise die messbare Permeabilität eingestellt werden und somit eine bestimmte Fehlerstromstärke simuliert werden. Mittels der Anordnung der Bürde wird daher eine Überprüfung der Empfindlichkeit des Schutzschalters ermöglicht.

Vorzugsweise ist dabei die Bürde durch einen in Serie zum Prüfschalter geschalteten Widerstand gebildet. Bei der Ausführung der Prüfschaltung als Kurzschlussschaltung erfolgt der Kurzschluss daher über den Widerstand, der dann parallel zur Prüfwicklung angeordnet ist.

In einer besonders zweckdienlichen Ausgestaltung ist die zuschaltbare Bürde derart bemessen, dass beim Schließen des Prüfkontaktes ein für den Schutzschalter vorgegebenes Auslösekriterium erfüllt oder um ein definiertes Maß übererfüllt ist.

Wie bereits erwähnt, bietet die Bürde die Möglichkeit, die Empfindlichkeit des Schutzschalters zu überprüfen. Wird die zuschaltbare Bürde derart bemessen, dass das für den Schutzschalter durch Normen vorgegebene Auslösekriterium exakt erfüllt ist, können Anstiege des Auslösefehlerstromes über einen zulässigen Grenzwert hinaus erkannt werden. Durch Wahl der Bürde derart, dass das Auslösekriterium um ein bestimmtes Maß übererfüllt ist, kann eine ordnungsgemäße Auslösung auch bei ungünstigen Bauelementetoleranzen sichergestellt werden. Bei einer reinen Kurzschlusswicklung mit Null-Ohm-Widerstand wäre das Auslösekriterium um ein Vielfaches überschritten. Eine derartige Prüfung bezieht sich daher auf die reine Funktionsprüfung der mechanischen Trennung der Leiter. Die Wahl der Bürde zur Bestimmung des für den Schutzschalter vorgesehenen Auslösekriteriums hängt dabei vom Aufbau des Schutzschalters, beispielsweise von der Anzahl der Wicklungen der Steuerwicklung, ab.

Die Überprüfung der Empfindlichkeit ist bei der bisherigen Methode des Kurzschlusses zweier Leiter aufgrund des üblicherweise großen Nennspannungsbereiches nicht oder nur stark eingeschränkt möglich. Denn bei der herkömmlichen Prüfeinrichtung bleibt eine Unempfindlichkeit des Schutzschalters bis zu einem gewissen Grad unentdeckt. Es besteht nämlich die Gefahr, dass der Schutzschalter aufgrund einer Funktionsstörung nicht beim festgelegten Auslösefehlerstrom, sondern erst bei einem Vielfachen davon auslöst. Bei einer Funktionsüberprüfung nach der herkömmlichen Methode würde diese Funktionsstörung nicht entdeckt werden, da durch den Kurzschluss der Leiter der Auslösefehlerstrom deutlich überschritten wird. Die über die potentialfreie Prüfwicklung bereitgestellte Prüfmethode ermöglicht daher deutlich bessere Aussagen im Hinblick auf die Funktionsfähigkeit des Schutzschalters als eine herkömmliche Prüfeinrichtung. Insbesondere wird die Gefahr ausgeschlossen, dass eine Funktionsstörung unentdeckt bleibt, und im Ernstfall bei Auftreten eines Fehlerstroms ein Mensch Schaden nimmt.

In einer vorteilhaften Ausbildung ist die zuschaltbare Bürde variierbar, insbesondere um bezüglich des Nennfehlerstromes einstellbare Schutzschalter auf unterschiedliche Empfindlichkeiten hin überprüfen zu können. Die Variierbarkeit der Bürde wird beispielsweise durch ein einstellbares Potentiometer in der Prüfschaltung oder auch durch den Einsatz unterschiedlicher Widerstände beispielsweise in Verbindung mit einem mehrstufigen Drehschalter in der Prüfschaltung verwirklicht.

Gemäß einer besonders zweckdienlichen Ausgestaltung weist die Prüfschaltung eine dauernd wirksame Bürde auf, die die über die Steuerwicklung messbare Permeabilität beeinflusst.

Bei herkömmlichen Schutzschaltern ist eine solche permanente Bürde oftmals parallel zur Steuer-/ oder Sekundärwicklung angeordnet, um das Auslöseverhalten des Schutzschalters festzulegen. Dies hat jedoch den Nachteil, dass über die parallel zur Steuerwicklung angeordnete Bürde ein Strom fließt, der die Auswertung des Spannungsabfalls an einem zur Steuerwicklung in Serie geschalteten Messwiderstand als Maß für die gemessene Permeabilität erschwert. Die Anordnung einer solchen permanent wirkenden Bürde in der Prüfschaltung hat im Hinblick auf das Auslöseverhalten die gleiche Wirkung wie die Anordnung parallel zur Steuerwicklung, bietet jedoch den wesentlichen Vorteil, dass die Auswertung des Spannungsabfalls an dem zur Steuerwicklung in Reihe geschalteten Messwiderstand deutlich vereinfacht ist.

Bevorzugt ist die dauernd wirksame Bürde variierbar, so dass eine Einstellung des Auslösefehlerstromes bzw. des Nennfehlerstromes ermöglicht ist. Im Zusammenhang mit der Möglichkeit der Überprüfung auf unterschiedliche Auslösefehlerströme durch die veränderbare zuschaltbare Bürde kann damit eine ordnungsgemäße Auslösung auch bei ungünstigen Bauelementetoleranzen sichergestellt werden.

Vorzugsweise ist die Prüfwicklung symmetrisch um den Summenstromwandler gewickelt. Die symmetrische oder gleichmäßige Wicklung um den Summenstromwandler gewährleistet hierbei, dass sich die durch die Lastströme verursachten inhomogenen Magnetfelder in Summe in ihrer induzierenden Wirkung aufheben, und dass somit keine Störspannungen in der Wicklung induziert werden. Insbesondere ist dies erforderlich, wenn die Prüfschaltung die permanent wirksame Bürde aufweist, denn damit ist eine feldverteilungsunabhängige Bürdung des Summenstromwandlers erzielt. Durch die gleichmäßige Wicklung werden ungleichmäßige Feldverteilungen im Wandlerkern, beispielsweise verursacht durch das Dipolfeld des Laststromes, über den Umfang des Summenstromwandlers hinweg gemittelt.

In einer zweckdienlichen Ausgestaltung weist die Prüfschaltung einen zusätzlichen Schalter oder Taster zur Fernauslösung des Schutzschalters auf, über den die Prüfwicklung kurzschließbar ist.

Insbesondere die potentialfreie Ausbildung der Prüfschaltung ist im Hinblick auf sicherheitstechnische Vorgaben für eine solche Fernauslösung von Vorteil. Gleichzeitig ist die Prüfwicklung gegenüber der mit dem Leiternetz elektrisch verbundenen Steuerwicklung zweckdienlicherweise ausreichend gut isoliert, um die sicherheitstechnischen Vorgaben zu erfüllen, welche eine sichere galvanische Trennung einer Fernauslöseschaltung zu dem Leiternetz verlangen.

In einer bevorzugten Alternative ist für die Fernauslösung neben der Prüfwicklung eine weitere Wicklung um den Summenstromwandler vorgesehen. Diese ist vorzugsweise ebenfalls kurzschließbar. Falls die Schaltung für die Fernauslösung auf eine permanent wirksame Bürde verzichtet, sind einige wenige Windungen der weiteren Wicklung ausreichend, um die Funktion der Fernauslösung zu gewährleisten. Die Wicklung muss in diesem Falle nicht symmetrisch ausgebildet sein. Dies hat den Vorteil einer vereinfachten Isolation zur Steuerwicklung.

Die auf das Verfahren bezogene Aufgabe wird gemäß der Erfindung gelöst durch die Merkmalskombination des Anspruchs 12. Danach wird die Funktionsfähigkeit eines Fehlerstrom-Schutzschalters durch eine Prüfschaltung mit einer um den Summenstromwandler gewickelten Prüfwicklung simuliert.

Die im Hinblick auf den Schutzschalter erwähnten Vorteile und bevorzugten Ausführungen sind sinngemäß auf das Verfahren zu übertragen. Besonders zweckdienliche Ausgestaltungen des Verfahrens sind in den Unteransprüchen niedergelegt.

Ausführungsbeispiele der Erfindung werden im Folgenden anhand der Zeichnung näher erläutert. Es zeigen jeweils in schematischen Darstellungen:
- FIG 1: ein Schaltbild eines Schutzschalters mit einer Prüfschaltung,
- FIG 2: ein Schaltbild eines Schutzschalters mit modifizierter Prüfschaltung und einer separaten Fernauslöseschaltung,
- FIG 3: ein B-H-Diagramm mit unterschiedlichen Magnetisierungskurven,
- FIG 4: einen Ausschnitt aus der Schaltungsanordnung eines Schutzschalters mit einer parallel zur Steuerwicklung des Schutzschalters angeordneten Bürde und
- FIG 5: eine ausschnittsweise Schaltungsanordnung eines Prüfschalters mit einer parallel zur Prüfwicklung angeordneten permanenten Bürde.

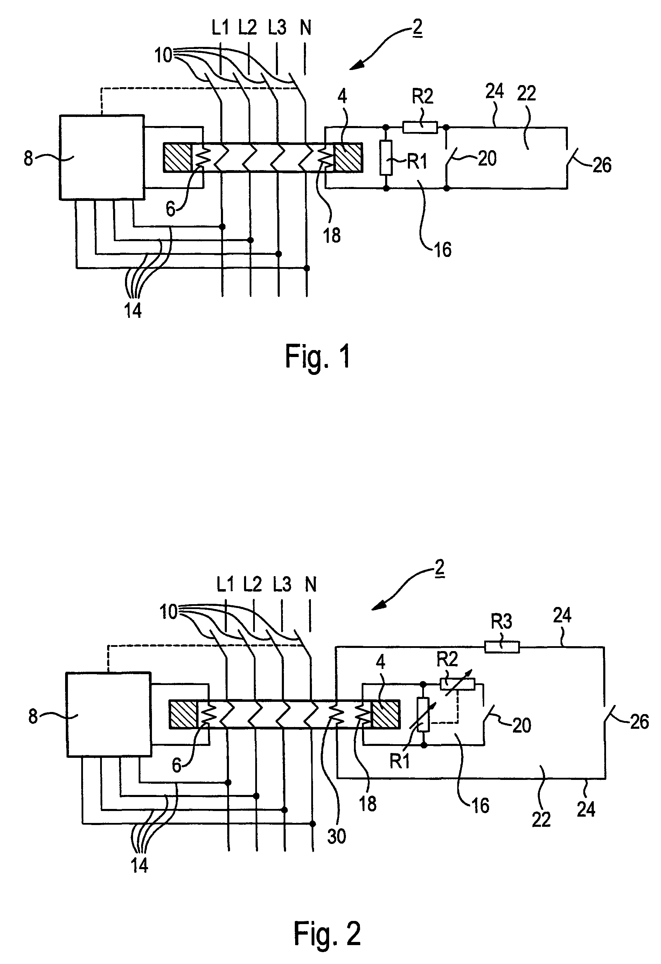

Gemäß FIG 1 weist ein Fehlerstrom-Schutzschalter 2 einen Summenstromwandler 4, eine um diesen gewickelte Steuerwicklung 6 sowie eine Funktionseinheit 8 auf. Letztere umfasst sowohl eine Ansteuer- und Auswerteelektronik für die Steuerwicklung 6, als auch einen Auslösemechanismus. Durch den Summenstromwandler 4 sind die Leiter L1, L2, L3 sowie der Nullleiter N eines Leiternetzes geführt. Jedem Leiter L1-L3,N ist ein Unterbrechungsschalter 10 zugeordnet, über den bei Auftreten eines unzulässigen Fehlerstroms die Leiter L1-L3,N mittels eines gestrichelt dargestellten Schaltmechanismusses 12 getrennt werden.

Von den einzelnen Leitern L1-L3,N führen Versorgungsleitungen 14 zur Funktionseinheit 8, um für die darin integrierte Elektronik eine Energieversorung bereitzustellen. Der Schutzschalter 2 gemäß FIG 1 ist daher definitionsgemäß als netzabhängiger DI-Schutzschalter ausgebildet.

Neben den bisher beschriebenen Elementen, die jeder DI-Schutzschalter 2 aufweist, umfasst der Schutzschalter gemäß FIG 1 als wesentliches neues Merkmal eine Prüfschaltung 16 mit einer um den Summenstromwandler 4 gewickelten Prüfwicklung 18. Parallel zur Prüfwicklung 18 ist eine permanent wirksame Bürde R1 in Form eines Widerstandes vorgesehen. Die Prüfschaltung 16 weist einen Prüfschalter 20 auf, über den die Prüfwicklung 18 über eine weitere zuschaltbare Bürde R2 kurzschließbar ist. Diese ist ebenfalls als Widerstand ausgebildet, der in Serie zum Prüfschalter 20 angeordnet ist. Im Ausführungsbeispiel der FIG 1 ist die Prüfwicklung 18 zugleich Teil einer Fernauslöseschaltung 22, die über eine Fernauslöseleitung 24 mit der Prüfschaltung 16 verbunden ist und einen Schalter 26 aufweist, der parallel zum Prüfschalter 20 angeordnet ist.

Aus Sicherheitsgründen und um die Stoßstromfestigkeit des Schutzschalters zu gewährleisten, kann parallel zur Steuerwicklung und/oder zur Prüfwicklung ein spannungsbegrenzendes Element vorgesehen sein.

Das Ausführungsbeispiel eines Schutzschalters 2 gemäß FIG 2 unterscheidet sich von dem in FIG 1 dargestellten dahingehend, dass die Fernauslöseschaltung 22 als eine separate Fernauslöseschaltung 22 mit eigener Wicklung 30 ausgebildet ist, und dass die permanent wirkende Bürde R1 und die zuschaltbare Bürde R2 als einstellbarer Widerstand in Form eines Doppelpotentiometers ausgebildet ist. Die Fernauslöseschaltung 22 ist hierbei über den Schalter 26 und über einen als Bürde R3 wirkenden Widerstand kurzschließbar, um die Auslösung des Schutzschalters 2 zu veranlassen.

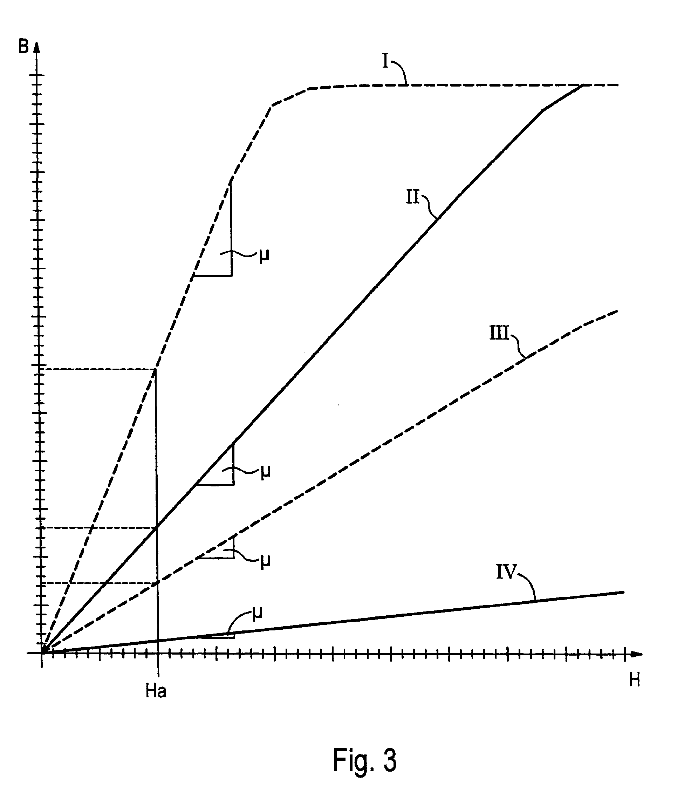

Die Wirkungsweise der Prüfschaltung 16 zur Überprüfung der Funktionsfähigkeit des Schutzschalters 2 wird im Folgenden in Verbindung mit FIG 3 erläutert. In FIG 3 ist ein B-H-Diagramm abgebildet, in dem mehrere Magnetisierungskurven I-IV eingezeichnet sind. Auf der Ordinate ist die magnetische Induktion B gegenüber der magnetischen Feldstärke H auf der Abszisse aufgetragen. Die einzelnen Magnetisierungskurven I-IV weisen unterschiedliche Steigungen auf, wobei die Magnetisierungskurve I ab einer bestimmten magnetischen Feldstärke H deutlich in einen Sättigungsbereich abknickt. Die Steigung der einzelnen Magnetisierungskurven I-IV entspricht der von der Steuerwicklung 6 erfassten Permeabilität µ des Summenstromwandlers 4. Die von der Steuerwicklung 6 gemessene Permeabilität µ wird bestimmt durch die tatsächliche Permeabilät des Summenstromwandlers 4 sowie durch überlagerte Effekte. Ein solcher überlagerter Effekt ist beispielsweise das Auftreten eines Fehlerstroms im Leiternetz, oder auch eine Bürde. Beide Effekte bewirken eine Veränderung des Verlaufs der Magnetisierungskurve und werden von der Steuerwicklung mit der zugehörigen Auswerteeinheit erfasst. Die Permeablität µ, also die Steigung der Magnetisierungskurve, wird in der Regel durch die permanente Bürde R1 eingestellt. Dabei wird die Steigung der Magnetisierungskurve mit geringerem Widerstandswert der Bürde R1 immer flacher. Über die permanente Bürde R1 wird das Auslöseverhalten des Schutzschalters 2 mitbestimmt.

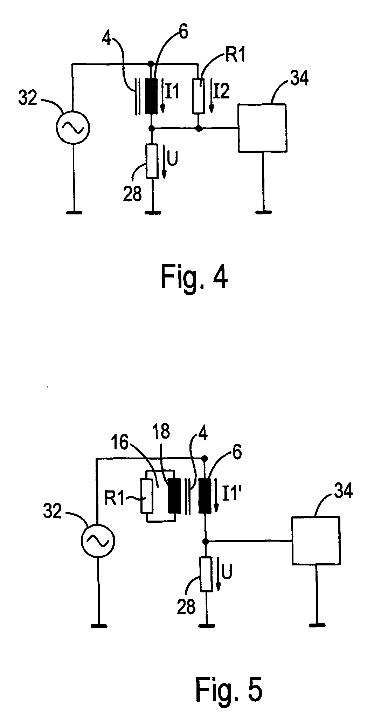

Die Steuerwicklung 6 wird mit einer Wechselspannung beaufschlagt, so dass der Summenstromwandler 4 wechselweise magnetisiert wird. Die Auswertung der Magnetisierungskurve erfolgt dabei in einem Arbeitspunkt Ha bei einer festgelegten magnetischen Feldstärke H. Dabei wird ausgenutzt, dass der Spulenwiderstand der Steuerwicklung 6 bei hoher Permeabilität µ hoch ist und bei geringer Permeabilität entsprechend geringer. Der Spannungsabfall an der Steuerwicklung 6 wird über einen Messwiderstand 28 ausgewertet (vgl. hierzu FIG 4 und FIG 5).

Über die permanent wirksame Bürde R1 ist die Prüfwicklung 18 abgeschlossen. Aufgrund der wechselweisen Magnetisierung des Summenstromwandlers 4 über die Steuerwicklung 6 wird in der Prüfwicklung 18 eine Spannung induziert und es fließt in der Prüfschaltung 16 ein Strom, so dass von der Prüfwicklung 16 ein Magnetfeld erzeugt wird, welches der von der Steuerwicklung 6 hervorgerufenen Magnetisierung des Summenstromwandlers 4 entgegenwirkt. Die von der Steuerwicklung 6 gemessene Permeabilität µ ist daher geringer als die tatsächliche Permeabilität des Summenstromwandlers 4.

Bei der Betätigung des Prüfschalters 20 wird die weitere Bürde R2 zugeschaltet, so dass die messbare Permeabilität µ erneut verändert wird. Je geringer dabei der Widerstandswert der weiteren Bürde R2 ist, desto größer ist die Änderung der Permeabilität µ. Die zuschaltbare Bürde R2 wird nun vorzugsweise derart gewählt, dass die dadurch hervorgerufene Änderung in der messbaren Permeabilität µ der Situation bei Auftreten eines Fehlerstroms, beispielsweise eines Auslösefehlerstroms entspricht, bei dem der Schutzschalter 2 die Leiter L1-L3,N trennt. Mit Zuschalten der Bürde R2 wird demnach das Auftreten eines Fehlerstroms simuliert.

Der entscheidende Vorteil dieser Prüfmethode ist darin zu sehen, dass durch Wahl eines geeigneten Widerstandswerts für die Bürde R2 unterschiedlich hohe Auslösefehlerströme simuliert werden können, und dass damit die Empfindlichkeit des Schutzschalters 2 überprüft werden kann. Zudem bedarf die Prüfschaltung 16 keiner separaten Spannungsversorgung. Denn aufgrund ihres Funktionsprinzips wird über die Prüfwicklung 18 eine Spannung in die Prüfschaltung 16 induziert.

Ein weiterer Vorteil der Prüfschaltung 16 ist darin zu sehen, dass sie gleichzeitig für eine Fernauslösung herangezogen werden kann. Hierzu sind lediglich entsprechende Fernauslöseleitungen 24 mit der Prüfschaltung 16 zu verbinden. Insbesondere die potentialfreie Ausbildung der Prüfschaltung 16 ist für eine solche Fernauslösung im Hinblick auf sicherheitstechnische Anforderungen von Vorteil. Wird die Prüfschaltung 16 gleichzeitig für eine Fernauslösung herangezogen, so ist darauf zu achten, dass die Prüfwicklung 18 zu der üblicherweise auf Potential des Hauptstromkreises liegenden Steuerwicklung 6 ausreichend gut isoliert ist.

Bei der Anordnung der permanenten Bürde R1 in der Prüfschaltung 16 gemäß FIG 1 ist die Prüfwicklung 18 vorzugsweise symmetrisch und gleichmäßig um den Summenstromwandler 4 angeordnet. Damit wird für den Summenstromwandler 4 eine feldverteilungsunabhängige Bürde bereitgestellt, um Fehler bei der Auswertung aufgrund von Inhomogenitäten der Magnetfelder zu vermeiden. Solche Inhomogenitäten der werden durch unsymmetrische Anordnung der Leiter L1-L3,N im Summenstromwandler 4 hervorgerufen, so dass - selbst wenn kein Fehlerstrom fließt - lokale Magnetfelder auftreten, welche im Summenstromwandler 4 zu lokalen Magnetisierungen führen. Die Induktionswirkungen dieser lokalen Magnetisierungen heben sich in ihrer Summe nur dann auf, wenn eine Wicklung homogen auf dem Wandlerkern verteilt ist.

Anhand der FIG 4 und FIG 5 wird die vorteilhafte Anordnung der permanenten Bürde R1 parallel zur Prüfwicklung 18 anstelle der Anordnung parallel zur Steuerwicklung 6 erläutert. Die FIG 4 zeigt dabei die herkömmliche Anordnung der Bürde R1 parallel zur Steuerwicklung 6, und FIG 5 die neue Anordnung der permanenten Bürde R1 innerhalb der Prüfschaltung 16. Die Steuerwicklung 6 wird über einen Spannungsgenerator 32 mit einer Wechselspannung beaufschlagt. In Serie zur Prüfwicklung 6 ist jeweils der bereits erwähnte Messwiderstand 28 angeordnet, über den der Spannungsabfall an der Steuerwicklung 6 als Maß für die messbare Permeabilität erfasst wird. Parallel zum Messwiderstand 28 ist eine Auswerteschaltung 34 vorgesehen. Bei der Anordnung gemäß FIG 4 fließt sowohl über die Steuerwicklung 6 ein Teilstrom I1 als auch über die permanente Bürde R1 ein Teilstrom I2. Der Spannungsabfall U über dem Messwiderstand 28 wird bestimmt durch beide Teilströme I1, I2. Im Gegensatz hierzu fließt gemäß dem Ausführungsbeispiel nach FIG 5 der gesamte Strom I1' über die Steuerwicklung 6. Dies vereinfacht die Auswertung des Spannungsabfalls U am Messwiderstand 28.

## Patentansprüche

1. Fehlerstrom-Schutzschalter (2), insbesondere Differenzstrom-Schutzschalter, mit einem Summenstromwandler (4) und einer um diesen gewickelten Steuerwicklung(6), **dadurch gekennzeichnet, dass** eine netzspannungsunabhängige Prüfschaltung (16) mit einer um den Summenstromwandler (4) gewickelten potentialfreien Prüfwicklung (18) vorgesehen ist.

2. Schutzschalter (2) nach Anspruch 1, **dadurch gekennzeichnet, dass** die Prüfschaltung (16) einen Prüfschalter oder -taster (20) aufweist, über den die Prüfwicklung (18) kurzschließbar ist.

3. Schutzschalter (2) nach Anspruch 1 oder 2, **dadurch gekennzeichnet, dass** die Prüfschaltung (16) ohne separate Spannungsversorgung ausgebildet ist.

4. Schutzschalter(2) nach einem der vorhergehenden Ansprüche, **dadurch gekennzeichnet, dass** die Prüfschaltung (16) eine zuschaltbare Bürde (R2) aufweist, die die über die Steuerwicklung (6) messbare Permeabilität (µ) beeinflusst.

5. Schutzschalter (2) nach Anspruch 4, **dadurch gekennzeichnet, dass** die zuschaltbare Bürde (R2) durch einen in Serie zum Prüfschalter (20) geschalteten Widerstand gebildet ist.

6. Schutzschalter (2) nach Anspruch 4 oder 5, **dadurch gekennzeichnet, dass** die zuschaltbare Bürde (R2) derart bemessen ist, dass ein für den Schutzschalter (2) vorgegebenes Auslösekriterium erfüllt oder um ein definiertes Maß übererfüllt ist.

7. Schutzschalter (2) nach einem der Ansprüche 4 bis 6, **dadurch gekennzeichnet, dass** die zuschaltbare Bürde (R2) variierbar ist.

8. Schutzschalter (2) nach einem der vorhergehenden Ansprüche, **dadurch gekennzeichnet, dass** die Prüfschaltung (16) eine dauernd wirksame Bürde (R1) aufweist, die die über die Steuerwicklung (6) messbare Permeabilität (µ) beeinflusst.

9. Schutzschalter (2) nach Anspruch 8, **dadurch gekennzeichnet, dass** die dauernd wirksame Bürde (R1) variierbar ist.

10. Schutzschalter (2) nach einem der vorhergehenden Ansprüche, **dadurch gekennzeichnet, dass** die Prüfwicklung (16) symmetrisch um den Summenstromwandler (4) gewickelt ist.

11. Schutzschalter (2) nach einem der vorhergehenden Ansprüche, **dadurch gekennzeichnet, dass** für eine Fernauslösung die Prüfschaltung (16)einen Schalter (26) aufweist, über den die Prüfwicklung (18) kurzschließbar ist.

12. Schutzschalter (2) nach einem der Ansprüche 1 bis 10, **dadurch gekennzeichnet, dass** für eine Fernauslösung eine weitere Wicklung (30) um den Summenstromwandler (4) vorgesehen ist.

13. Verfahren zum Überprüfen der Funktionsfähigkeit eines Fehlerstrom-Schutzschalters (2), insbesondere Differenzstrom-Schutzschalter, welcher einen Summenstromwandler (4) mit einer um diesen gewickelten Steuerwicklung (6) aufweist, **dadurch gekennzeichnet, dass** das Auftreten eines Fehlerstroms durch eine netzspannungsunabhängige Prüfschaltung (16) mit einer um den Summenstromwandler (4) gewickelten potentialfreien Prüfwicklung (18) simuliert wird.

14. Verfahren nach Anspruch 13, **dadurch gekennzeichnet, dass** die Prüfwicklung (18) über eine zuschaltbare Bürde (R2) kurzgeschlossen wird, so dass die über die Steuerwicklung (6) die messbare Permeabilität (µ) einen definierten Wert einnimmt.

15. Verfahren nach Anspruch 13 oder 14, **dadurch gekennzeichnet, dass** eine variable Bürde (R2) eingesetzt wird.
